# EUROPÄISCHE PATENTSCHRIFT

(11) **EP 1 076 207 B1**
(45) Veröffentlichungstag und Bekanntmachung des Hinweises auf die Patenterteilung: **19.02.2003**
(21) Anmeldenummer: 00116373.2
(22) Anmeldetag: 28.07.2000
(51) Int. Cl.: F23D 14/66, F23D 14/22

(54) **Rekuperatorbrenner und zugehöriger Ofen**
Recuperative burner and associated oven
Brûleur à récupération et four associé

(30) Priorität: 10.08.1999 DE 19937305
(43) Veröffentlichungstag der Anmeldung: 14.02.2001
(73) Patentinhaber: RIEDHAMMER GMBH, 90411 Nürnberg (DE)
(72) Erfinder: Späthe, Herbert, 90425 Nürnberg (DE); Becker, Friedherz H., 90530 Wendelstein (DE); Deistler, Gerald, 90562 Kalchreuth (DE); Hajduk, Andreas, 90451 Nürnberg (DE); Meier, Günter, 92318 Neumarkt (DE)
(74) Vertreter: Becker, Thomas, Dr., Dipl.-Ing.

(56) Entgegenhaltungen:
- DE-A- 4 224 315
- GB-A- 1 442 128
- US-A- 4 877 396
- PATENT ABSTRACTS OF JAPAN vol. 011, no. 146 (M-587), 13. Mai 1987 (1987-05-13) -& JP 61 280309 A (OSAKA GAS CO LTD), 10. Dezember 1986 (1986-12-10)
- PATENT ABSTRACTS OF JAPAN vol. 1995, no. 11, 26. Dezember 1995 (1995-12-26) & JP 07 208708 A (OSAKA GAS CO LTD), 11. August 1995 (1995-08-11)

## Beschreibung

Die Erfindung betrifft einen Rekuperatorbrenner, insbesondere für industrielle Anwendungen, insbesondere für Öfen der keramischen Industrie.

Industrielle Brenner sind heutzutage meistens Gasbrenner. Gasbrenner werden in solche ohne und mit Vormischung unterteilt.

Dem Fachbuch von Brunklaus "Industrieöfen", 6. Auflage, 1994 (ISBN 3-8027-2906-4) lassen sich die verschiedenen Brennerarten im einzelnen entnehmen.

Dabei wird beschrieben, daß Brennersysteme zum Stand der Technik gehören, bei denen die Verbrennungsluft mit Hilfe eines Zentralrekuperators erwärmt wird. Daneben sind aber auch sogenannte Rekuperatorbrenner bekannt, bei denen der Rekuperator Bestandteil eines diskreten Brenners ist.

Rekuperatorbrenner ermöglichen eine Verbesserung der Vorwärmung der Verbrennungsluft. Auf diese Weise kann der feuerungstechnische Wirkungsgrad optimiert werden.

Bekannte Rekuperatorbrenner zeichnen sich dadurch aus, daß Brenngas und Luft an der Mündung in einer Brennkammer gemischt werden, wobei das Gas über mehrere radial angeordnete Düsen in den vorgewärmten Luftstrom eingedüst wird. Die Umsetzung des Brennstoffs in Wärme läuft danach zu einem großen Teil bereits in der Brennkammer ab, so daß die heißen Flammengase mit hoher Geschwindigkeit austreten.

Bei diesen Brennern befindet sich der Rekuperator in der Ofenwand oder sogar im Ofenkanal (siehe z.B. JP 61-280309, US 4 877 396). Dies erschwert den Zugang, beispielsweise für Wartungsarbeiten. Außerdem besteht die Gefahr eines "Befalls".

Der Erfindung liegt insoweit die Aufgabe zugrunde, einen Rekuperatorbrenner anzubieten, der eine leichte Montage, leichte Zugänglichkeit und eine leichte Wartung mit einem hohen feuerungstechnischen Wirkungsgrad verbindet und bei dem eine "Befall"-Gefahr so weit wie möglich reduziert wird.

Grundgedanke der Erfindung ist es, den Brenner so auszubilden, daß sein Rekuperator-Teil räumlich getrennt zur Brennerdüse angeordnet ist, so daß der Rekuperator außerhalb des Ofens angeordnet werden kann, während die Verbrennungsluft und das Abgas durch die Ofenwand geführt werden.

Dabei stehen der Rekuperator, die Leitungen für die Verbrennungsluft und das Abgas sowie die Brennerdüse, einschließlich der Gaszufuhr, selbstverständlich in strömungstechnischer Verbindung, wie im einzelnen nachstehend näher beschrieben wird.

Durch die räumliche Trennung der Brennerdüse, und damit der Stelle, an der die Verbrennungsluft mit dem Brenngas gemischt wird, vom Rekuperatorteil, lassen sich einerseits die entsprechenden Strömungswege wärmetechnisch nutzen und zum anderen der Rekuperatorteil außerhalb des Ofens anordnen, so daß er leicht zugänglich und problemfrei gewartet werden kann.

Im einfachsten Fall besteht der Brenner danach aus einem beispielsweise kastenförmigen Rekuperatorteil und einem von diesem abstehenden Versorgungsteil mit endseitiger Brennerdüse, wobei der Versorgungsteil in die Ofenwand verläuft und an einer Innenseite der Ofenwand oder im Ofenraum endet.

Darüber hinaus umfaßt die Erfindung den Gedanken, den Rekuperator aus mehreren Kammern auszubilden, die alternierend von Abgas beziehungsweise Verbrennungsluft durchströmt werden.

Danach betrifft die Erfindung in ihrer allgemeinsten Ausführungsform einen Rekuperatorbrenner mit folgenden Merkmalen:
- einer am Ende einer Gaszuführleitung angeordneten Brennerdüse,
- einer die Brennerdüse mit Abstand zur Gaszuführleitung unter Ausbildung eines ersten Ringkanals umgebenden Trennwand,
- einer mit Abstand zur Trennwand, unter Ausbildung eines zweiten Ringkanals, verlaufenden äußeren Umhüllung,
- einem mit Abstand hinter der Brennerdüse angeordneten Rekuperator, der
- aus mehreren radial zu den Ringkanälen verlaufenden, unmittelbar aneinander anschließenden Kammern besteht, die abwechselnd
- radial innen an den zweiten Ringkanal strömungstechnisch angeschlossen sind und radial außen eine Auslaßöffnung aufweisen (und im weiteren als Abgaskammern bezeichnet werden) beziehungsweise
- radial innen an den ersten Ringkanal strömungstechnisch angeschlossen sind und radial außen eine Luftzuführung aufweisen (und im folgenden Verbrennungsluft-Kammern oder Luftkammern genannt werden).

Über den zweiten Ringkanal wird durch Injektorwirkung Abgas aus dem Ofen angesaugt und in die Abgas-Kammern geführt, durch die Abgaskammern geleitet und schließlich außenseitig abgezogen.

Umgekehrt wird Luft (Verbrennungsluft) von außen in die Verbrennungsluft-Kammern geführt und durchströmt die Luftkammern, bevor die Luft anschließend entlang des ersten Ringkanals in Richtung auf die Brennerdüse geführt wird, an der sie mit dem Verbrennungsgas auf an sich bekannte Art und Weise vermischt wird.

Laufen der erste und der zweite Ringkanal konzentrisch zueinander, so erfolgt bereits in diesem Abschnitt ein Wärmeübergang von den heißen Abgasen auf die Verbrennungsluft, und zwar bevor der Abgasstrom den eigentlichen Rekuperator erreicht.

Dabei können der erste und der zweite Ringkanal über die Brennerdüse vorstehen, je nachdem, welche Flamme ausgebildet werden soll und an welcher Stelle die Brennerdüse anzuordnen ist.

Nach einer Ausführungsform können die Kammern die Form von Kreissegmenten haben. Daraus folgt implizit, daß der Rekuperator selbst eine Zylinderform aufweist, dessen Achse vorzugsweise koaxial zur Mittenlängsachse der Ringkanäle verläuft.

Auf diese Weise erhalten die einzelnen Kammern - in der Aufsicht - die Form von "Tortenstücken".

Es wurde bereits darauf hingewiesen, daß die Kammern alternierend der Abgasführung beziehungsweise der Führung der Verbrennungsluft dienen, also beispielsweise einer Abgaskammer zwei Luftkammern benachbart sind beziehungsweise neben einer Luftkammer zwei Abgaskammern verlaufen. Auf diese Weise wird eine große Wärmeübertragungsfläche zwischen benachbarten Kammern bereitgestellt.

Der wärmetechnische Wirkungsgrad kann erhöht werden, wenn die Kammern in mehrere Teilkammern unterteilt sind, wobei die Teilkammern einer Kammer wiederum strömungstechnisch untereinander verbunden sind.

Auf diese Weise wird erreicht, daß das Gas beziehungsweise die Luft gezielt entlang der beschriebenen Wärmeübertragungsflächen geführt wird.

Dabei können die Teilkammern jeder Kammer, in Axialrichtung der Ringkanäle betrachtet, radial benachbart angeordnet sein, wodurch sich zwangsläufig ergibt, daß die äußere Teilkammer eine größere Breite aufweist (in der Aufsicht) als die innere Teilkammer.

Dabei bietet es sich an, benachbarte Teilkammern einer Kammer in entgegengesetzter Richtung durchströmbar auszuführen. Dazu können beispielsweise innerhalb jeder Teilkammer Leitelemente zur zwangsweisen Gas-/Luftführung vorgesehen sein. Ebenso ist es möglich, jeder Teilkammer zum gleichen Zweck Leitelemente zuzuordnen.

Eine Möglichkeit dazu wird nachstehend in einem Ausführungsbeispiel erläutert.

Die Leitelemente können so zueinander angeordnet werden, daß das Gas beziehungsweise die Luft mäanderförmig durch die zugehörige Kammer geführt wird.

Der beschriebene Aufbau des Rekuperatorbrenners ermöglicht es, auch vorhandene konventionelle Gasbrenner mit einem Rekuperatorteil nachzurüsten.

Nicht nur, aber auch im Fall der Nachrüstung kann es zweckmäßig sein, das Rekuperator-Volumen auf den konkreten Anwendungsfall abzustimmen.

Dies geschieht am einfachsten durch eine "Verlängerung" oder "Verkürzung" des Rekuperators in Axialrichtung.

Zu diesem Zweck sieht eine Ausführungsform vor, den Rekuperator aus mehreren, in Axialrichtung der Ringkanäle hintereinander angeordneten Teilelementen zusammenzusetzen. Jede Kammer wird dabei durch mehrere, unmittelbar hintereinander angeordnete Teilelemente gebildet.

Die Teilelemente können beispielsweise die Form von Ringscheiben haben, die Öffnungen aufweisen, die mit den Öffnungen benachbarter Ringscheiben die beschriebenen Kammern bilden.

Es ist selbstverständlich, daß die Kammern stirnseitig begrenzt sein müssen, was beispielsweise durch entsprechende Kreisscheiben (ohne Öffnungen) erreicht wird.

Zumindest die Wände der Kammern des Rekuperators sollten aus einem hochwärmeleitfähigen Werkstoff bestehen. Die Werkstoffauswahl wird sich an den Temperaturen orientieren, die über das Abgas im Rekuperator eingestellt werden.

So können die Wände beispielsweise aus Metall bestehen. Für Hochtemperaturanwendungen, bishin zu beispielsweise 1.400° C, wie sie im Abgas von keramischen Glattbrand-Öfen auftreten können, bieten sich Werkstoffe auf Basis Siliciumcarbid an.

Wird die Gaszuführleitung durch den Rekuperator hindurch zur Brennerdüse geführt, erfolgt gleichzeitig eine Vorwärmung des Verbrennungsgases. Dabei kann die Gaszuführleitung im einfachsten Fall wiederum koaxial zur Mittenlängsachse der Ringkanäle angeordnet sein.

Nach einer weiteren Ausführungsform ist der Brenner als Parallelstrombrenner ausgebildet. Gas und Luft diffundieren allmählich im Bereich der Brennerdüse ineinander. Gas und Luft werden als zwei Parallelströme aus runden oder eckigen Öffnungen nebeneinander oder als koaxiale Ströme in den Verbrennungsraum gedrückt. Dazu kann die Brennerdüse beispielsweise einen flanschartigen Rand aufweisen, der in Verlängerung des ersten Ringkanals Durchbrechungen aufweist, so daß die Verbrennungsluft in einzelne Luftströme aufgeteilt strahlenartig dem Gas zugeführt wird.

Schließlich betrifft die Erfindung einen Ofen mit mindestens einem Rekuperatorbrenner der vorstehend beschriebenen Art, bei dem der Rekuperator an einer Außenseite einer Ofenwand angeordnet ist, die Ringkanäle sich zumindest in die Ofenwand erstrecken und die Brennerdüse in der Ofenwand oder benachbart einer Innenseite der Ofenwand angeordnet ist, wie dies bezüglich des grundsätzlichen Aufbaus bereits vorstehend beschrieben wurde. Der Begriff "Ofenwand" inkludiert dabei auch eine "Ofendecke".

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher beschrieben. Dabei zeigen - in stark schematisierter Darstellung -
- Figur 1:: einen Längsschnitt durch einen Rekuperatorbrenner
- Figur 2:: eine Seitenansicht des Brenners nach Figur 1
- Figur 3:: eine Aufsicht auf den Brenner gemäß Figur 1 entlang der Ebene A - A.

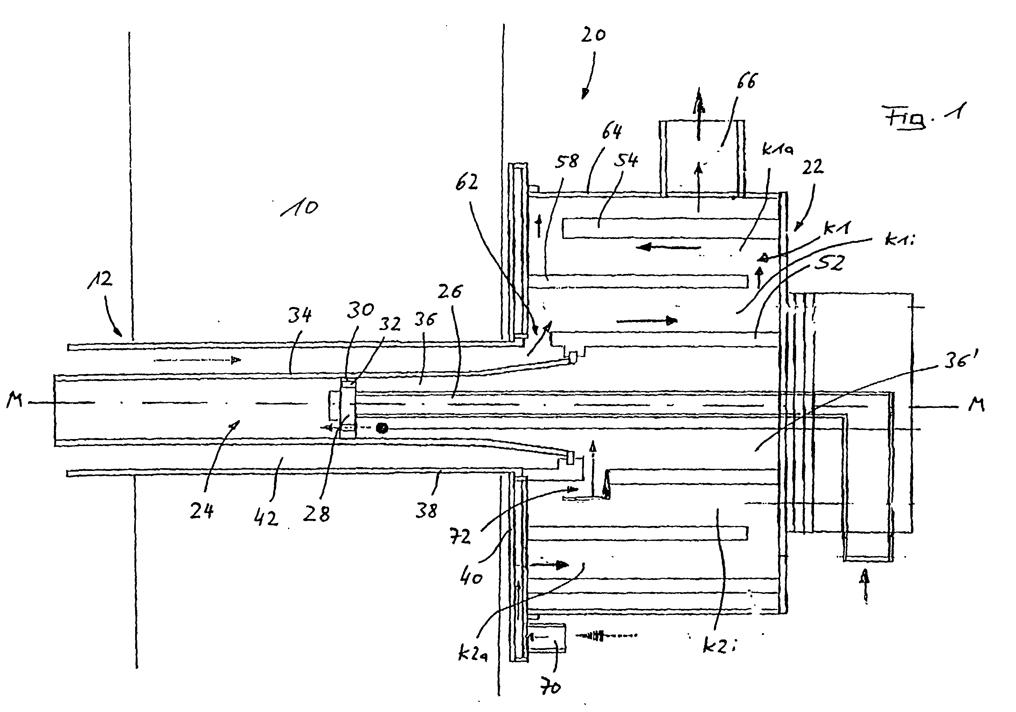

In Figur 1 ist mit dem Bezugszeichen 10 schematisch eine Wand eines Tunnelofens zum Glattbrand von Porzellan dargestellt. In der Wand 10 verläuft von außen nach innen eine Öffnung 12, vor und in der ein Brenner 20 der nachstehend beschriebenen Bauart angeordnet ist:

Der Brenner 20 besteht aus einem außerhalb des Ofens befindlichen Rekuperator(-teil) 22 und einem innerhalb der Öffnung 12 der Ofenwand 10 verlaufenden Abschnitt 24. Konzentrisch zur Mittenlängsachse M der Öffnung 12 verläuft eine Gaszuführleitung 26 von außen durch den Rekuperator 22 bis in den Bereich der Öffnung 12. Endseitig ist die Gaszuführleitung 26 mit einer Brennerdüse 28 ausgebildet. Die Brennerdüse 28 besitzt einen flanschartigen Rand 30, in dem axial (in Richtung der Mittenlängsachse M) verlaufende Durchbrechungen 32 angeordnet sind.

Auf dem Außenumfang des Randes 30 liegt ein Teilabschnitt einer rohrförmigen Trennwand 34, die konzentrisch zur Mittenlängsachse M verläuft, wodurch zwischen der Gaszuführleitung 26 und der Trennwand 34 ein erster Ringkanal 36 gebildet wird, der sich in den Rekuperator 22 öffnet.

Mit Abstand um die rohrförmige Trennwand 34 verläuft eine äußere Umhüllung 38, die sich über die gesamte Länge der Öffnung 12 der Ofenwand 10 erstreckt und außenseitig in eine erste Stirnwand 40 des Rekuperators 22 mündet.

Zwischen der Trennwand 34 und der Umhüllung 38 wird so ein zweiter Ringkanal 42 ausgebildet, wobei "Ringkanal" stellvertretend für beliebige Querschnittsgeometrien steht.

Die Trennwand 34 mündet mit Abstand zur Stirnwand 40 in den Rekuperator 22, wo eine Verzweigung erfolgt, wie nachstehend beschrieben wird.

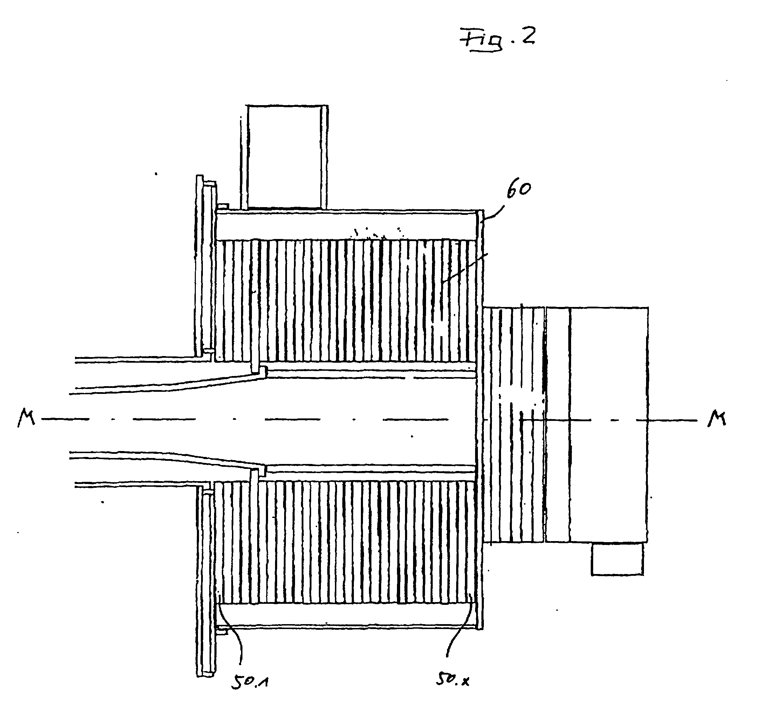

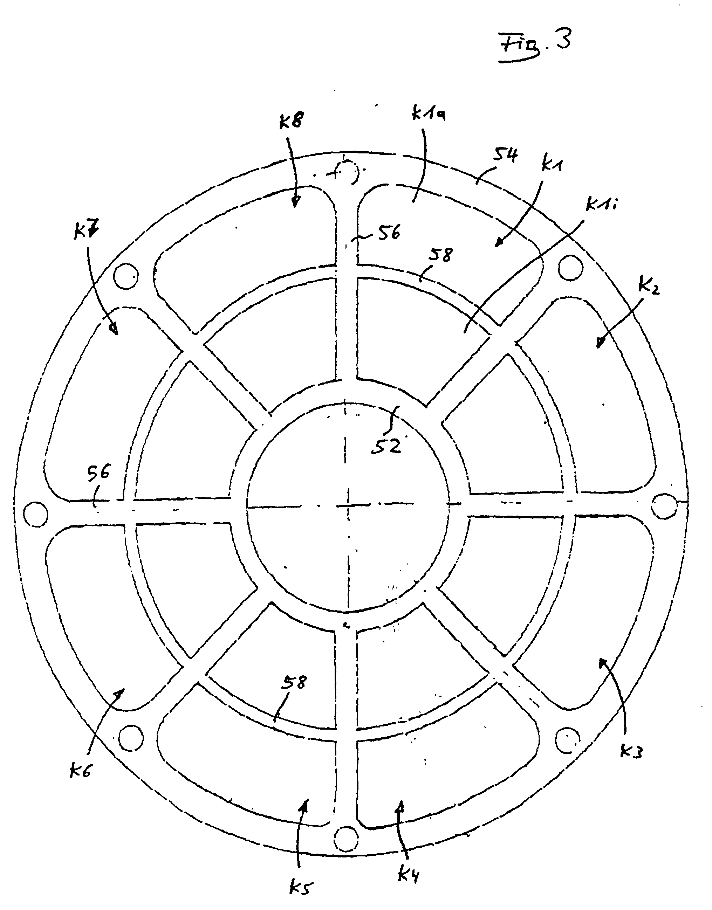

Wie Figur 2 zeigt, ist der Innenraum des Rekuperators 22 mit einer Vielzahl von scheibenförmigen Teilelementen 50.1.. 50.x bestückt. Die Elemente 50.1...50.x sind in Richtung der Mittenlängsachse M unmittelbar hintereinander angeordnet und verlaufen von der Stirnwand 40 zu einer gegenüberliegenden Stirnwand 60. Ihr prinzipieller Aufbau ergibt sich aus Figur 3.

Jedes Teilelement 50.1...50.x besitzt in der Aufsicht (Figur 3) eine Kreisringform mit einer Innenwand 52 und einer konzentrisch dazu verlaufenden Außenwand 54. Zwischen Innen- und Außenwand 52, 54 verlaufen radiale Stege 56, und zwar im Winkelabstand von 45° zueinander, wodurch acht Kammern K1 bis K8 gebildet werden. Jede Kammer ist mit einer zwischen Innen- und Außenwand 52, 54 verlaufenden Zwischenwand 58 bestückt. Jede Kammer (beispielsweise K1) wird so in zwei Teilkammern, eine äußere Teilkammer K1a und eine innere Teilkammer K1i untergliedert.

Die scheibenförmigen Teilelemente 50.1...50.x sind fluchtend hintereinander angeordnet, so daß die Wände 52,54,56,58 sich zu Begrenzungen der Kammern K1...K8 über die gesamte Baulänge des Rekuperators 22 ergänzen, und zwar mit folgenden Abwandlungen:

Erfindungsgemäß sollen die Kammern K1...K8 abwechselnd (alternierend) der Führung von Verbrennungsluft beziehungsweise Abgas dienen. Entsprechend müssen Zu- und Ableitungen innerhalb der Kammern K1...K8 eingerichtet werden.

Aus einer Zusammenschau der Figuren 1 und 3 läßt sich ablesen, daß beispielsweise die Innenwand 52 der Kammer K1 erst mit Abstand zur Stirnwand 40 beginnt (Öffnung 62), wodurch eine strömungstechnische Verbindung vom zweiten Ringkanal 42 in die Kammer K1 geschaffen wird. Entsprechendes gilt für die Kammern K3, K5 und K7. Weiter läßt sich Figur 1 entnehmen, daß die Zwischenwand 58 der Kammer K1 mit Abstand zur Stirnwand 60 endet, während die Außenwand 54 im wesentlichen analog der Innenwand 52 verläuft. Hierdurch ergibt sich für ein aus dem Ofenraum über den Ringkanal 42 angesaugtes Abgas ein mäanderförmiger Verlauf (Pfeile) entlang der Teilkammern K1i, K1a der Kammer K1 und analog gilt dies für die Kammern K3, K5 und K7. Mit Abstand zur Außenwand 54 verläuft zwischen den Stirnwänden 40, 60 ein Mantel 64. Das Abgas aller Abgaskammern K1, K3, K5 und K7 kann über eine Öffnung 66 im Mantel 64 den Rekuperator 22 verlassen.

Die verbleibenden Kammern K2, K4, K6 und K8 sind im wesentlichen analog aufgebaut. Auch hier sind die Teilelemente 50.1...50.x so zueinander ergänzt, daß sich eine strömungstechnische Verbindung von einer äußeren Luftzuführung 70 bis zu einem inneren Ausgang 72 ergibt, wie Figur 1 zeigt.

Dabei erfolgt die Luftzuführung 70 zunächst in einen Hohlraum der doppelwandig ausgeführten Stirnwand 40, von dort (über nicht dargestellte Öffnungen) in die äußeren Teilkammern, beispielsweise K2a, die anschließend von links nach rechts (Figur 1) durchströmt, dann vor der Stirnwand 60 umgelenkt und in der inneren Teilkammer, beispielsweise K2i in Richtung auf die Stirnwand 40 zurückgeführt wird, bevor sie über entsprechende Ausgänge 72 in einen Ringraum 36' gelangt, an den sich in Richtung auf die Brennerdüse 28 der erste Ringkanal 36 anschließt.

Wie dargestellt lassen sich über Aussparungen und/oder Vorsprünge in den Wänden der Rekuperator-Kammern oder in diesen selbst Leitelemente für das hindurchströmende Medium ausbilden, wobei die zeichnerische Darstellung rein beispielhaft ist.

Das heiße Ofengas wärmt auf seinem Weg durch die Abgaskammern K1, K3, K5 und K7 die Begrenzungswände auf, die die Wärme entsprechend an die durch die benachbarten Kammern K2, K4, K6 und K8 geführte Verbrennungsluft abgeben, die entsprechend vorgewärmt durch den Ringkanal 36 und die Durchbrechungen 32 dem Gasstrom zugeführt werden kann.

Die Vorteile des Brenners sind unter anderem:
- einfache Wartung
- Nachrüstbarkeit (keine Änderungen an der Ausmauerung von Ofenanlagen und/oder Brennersteinen notwendig)
- einstellbare Luftvorwärmung (über Art und Ausbildung der Kammern sowie den dadurch eingestellten Gas-/Luftweg)
- vielfältige Einsatzmöglichkeiten (unter anderem Öfen der keramischen Industrie)
- geringer Regelungsaufwand
- hoher wärmetechnischer Wirkungsgrad.

## Patentansprüche

1. Rekuperatorbrenner mit folgenden Merkmalen:
a) einer am Ende einer Gaszuführleitung (26) angeordneten Brennerdüse (28),
b) einer die Brennerdüse (28) mit Abstand zur Gaszuführleitung (26) unter Ausbildung eines ersten Ringkanals (36) umgebenden Trennwand (34),
c) einer, mit Abstand zur Trennwand (34), unter Ausbildung eines zweiten Ringkanals (42), verlaufenden äußeren Umhüllung (38),
d) einem mit Abstand hinter der Brennerdüse (28) angeordneten Rekuperator (22), der
e) aus mehreren, radial zu den Ringkanälen (36,42) verlaufenden, unmittelbar aneinander anschließenden Kammern (K1...K8) besteht, die abwechselnd
f₁) radial innen an den zweiten Ringkanal (42) strömungstechnisch angeschlossen sind und radial außen eine Auslassöffnung (66) aufweisen (Abgas-Kammern) beziehungsweise
f₂) radial innen an den ersten Ringkanal (36) strömungstechnisch angeschlossen sind und radial außen eine Luftzuführung (70) aufweisen (Verbrennungsluft-Kammern).

2. Brenner nach Anspruch 1, bei dem der erste und der zweite Ringkanal (36,42) konzentrisch zueinander angeordnet sind.

3. Brenner nach Anspruch 1, bei dem der erste und der zweite Ringkanal (36,42) über die Brennerdüse (28) vorstehen.

4. Brenner nach Anspruch 1, bei dem die Kammern (K1...K8) die Form von Kreissegmenten haben.

5. Brenner nach Anspruch 1, bei dem jede Kammer (K1...K8) in mehrere Teilkammern (K1a, K1i) unterteilt ist, die strömungstechnisch untereinander verbunden sind.

6. Brenner nach Anspruch 5, bei dem die Teilkammern (K1a, K1i) jeder Kammer (K1...K8), in Axialrichtung der Ringkanäle (36,42) betrachtet, radial benachbart angeordnet sind.

7. Brenner nach Anspruch 5, bei dem benachbarte Teilkammern (K1a, K1i) einer Kammer (K1...K8) in entgegengesetzter Richtung durchströmbar sind.

8. Brenner nach Anspruch 5, bei dem innerhalb jeder Teilkammer (K1a, K1i) und/oder jeder Teilkammer (K1a, K1i) zugeordnete Leitelemente zur zwangsweisen Gas-/Luftführung vorgesehen sind.

9. Brenner nach Anspruch 8, bei dem die Leitelemente so zueinander angeordnet sind, daß das/die durch die Teilkammern (K1a,K1i) hindurchgeführte Gas/Luft einen mäanderförmigen Verlauf nimmt.

10. Brenner nach Anspruch 1, bei dem der Rekuperator (22) aus mehreren, in Axialrichtung der Ringkanäle (36,42) hintereinander angeordneten Teilelementen (50.1...50.x) zusammengesetzt ist.

11. Brenner nach Anspruch 1, bei dem zumindest die Wände (52, 54, 56, 68) der Kammern (36, 42) des Rekuperators (22) aus einem hoch wärmeleitfähigen Werkstoff bestehen.

12. Brenner nach Anspruch 11, bei dem die Wände (52,54,56,58) aus Metall bestehen.

13. Brenner nach Anspruch 11, bei dem die Wände (52,54,56,58) aus Siliciumcarbid bestehen.

14. Brenner nach Anspruch 1, bei dem die Gaszuführleitung (26) durch den Rekuperator (22) hindurch zur Brennerdüse (28) verläuft.

15. Brenner nach Anspruch 1, bei dem die Brennerdüse (28) einen flanschartigen Rand (30) aufweist der in Verlängerung des ersten Ringkanals (36) Durchbrechungen (32) aufweist.

16. Ofen mit mindestens einem Rekuperatorbrenner nach einem der Ansprüche 1 bis 15, bei dem der Rekuperator (22) an einer Außenseite einer Ofenwand (10) angeordnet ist, die Ringkanäle (36,42) sich zumindest in die Ofenwand (10) erstrecken und die Brennerdüse (28) in der Ofenwand (10) oder benachbart einer Innenseite der Ofenwand (10) angeordnet ist.

## Claims

1. A recuperator burner having the following features:
a) a burner nozzle (28) arranged at the end of a gas supply line (26),
b) a partition wall (34) surrounding the burner nozzle (28) at a distance from the gas supply line (26), forming a first ring channel (36),
c) an outer sheathing (38) running at a distance from the partition wall (34), forming a second ring channel (42),
d) a recuperator (22) arranged at a distance downstream from the burner nozzle (28),
e) comprising a plurality of chambers (K1, ..., K8) directly adjacent to one another and running radially to the ring channels (36, 42), the chambers being alternately
f₁) hydraulically connected to the second ring channel (42) on the inside radially, and having an outlet orifice (66) on the outside radially (exhaust gas chambers) and/or
f₂) connected hydraulically to the first ring channel (36) on the inside radially, and having an air supply (70) on the outside radially (combustion air chambers).

2. The burner according to Claim 1, whereby the first and second ring channels (36, 42) are arranged concentrically to one another.

3. The burner according to Claim 1, whereby the first and second ring channels (36, 42) project above the burner nozzle (28).

4. The burner according to Claim 1, whereby the chambers (K1, ..., K8) have the form of segments of a circle.

5. The burner according to Claim 1, whereby each chamber (K1, ..., K8) is subdivided into a plurality of sectional chambers (K1a, K1i) which are hydraulically interconnected.

6. The burner according to Claim 5, whereby the sectional chambers (K1a, K1i) of each chamber (K1, ..., K8) are arranged radially side by side, as seen in the axial direction of the ring channels (36, 42).

7. The burner according to Claim 5, whereby the medium can flow in opposite directions through adjacent sectional chambers (K1a, K1i) of a chamber (K1, ..., K8).

8. The burner according to Claim 5, whereby baffle elements are provided within each sectional chamber (K1a, K1i) and/or are assigned to each sectional chamber (K1a, K1i) for forced guidance of the gas/air.

9. The burner according to Claim 8, whereby the baffle elements are arranged relative to one another so that the gas/air passing through the sectional chambers (K1a, K1i) follows a meandering course.

10. The burner according to Claim 1, whereby the recuperator (22) is composed of a plurality of sectional elements (50.1, ..., 50.x) arranged in succession one after the other in the axial direction of the ring channels (36, 42).

11. The burner according to Claim 1, whereby at least the walls (52, 54, 56, 58) of the chambers (36, 42) of the recuperator (22) are made of a material having a high thermal conductivity.

12. The burner according to Claim 11, whereby the walls (52, 54, 56, 58) are made of metal.

13. The burner according to Claim 11, whereby the walls (52, 54, 56, 58) are made of silicon carbide.

14. The burner according to Claim 1, whereby the gas supply line (26) runs through the recuperator (22) to the burner nozzle (28).

15. The burner according to Claim 1, whereby the burner nozzle (28) has a flange-like edge (30), which has perforations (32) in the extension of the first ring channel (36).

16. A furnace having at least one recuperator burner according to one of Claims 1 through 15, whereby the recuperator (22) is arranged on an outside of a furnace wall (10); the ring channels (36, 42) extend at least into the furnace wall (10); and the burner nozzle (28) is situated in the furnace wall (10) or adjacent to an inner side of the furnace wall (10).

## Revendications

1. Brûleur à récupération comprenant les caractéristiques suivantes :
a) un nez de brûleur (28) disposé à l'extrémité d'un conduit d'arrivée du gaz (26),
b) une paroi de séparation (34) entourant le nez de brûleur (28) à distance du conduit d'arrivée du gaz (26) en formant un premier canal annulaire (36),
c) une enveloppe extérieure (38) s'étendant à distance de la paroi de séparation (34) en formant un second canal annulaire (42),
d) un récupérateur (22) agencé à une certaine distance derrière le nez de brûleur (28), qui
e) se compose de plusieurs chambres (K1, ..., K8) raccordées directement les unes aux autres, s'étendant radialement par rapport aux canaux annulaires (36, 42), qui, alternativement,
f₁) sont raccordées radialement à l'intérieur au second canal annulaire (42) grâce à des moyens se rapportant à la technique des fluides et qui présentent radialement à l'extérieur un orifice de décharge (66) (chambres contenant du gaz d'échappement), ou bien
f₂) sont raccordées radialement à l'intérieur au premier canal annulaire (36) grâce à des moyens se rapportant à la technique des fluides et présentent radialement à l'extérieur une arrivée d'air (70) (chambres contenant de l'air de combustion).

2. Brûleur selon la revendication 1, dans lequel le premier et le second canal annulaire (36, 42) sont disposés de manière concentrique l'un par rapport à l'autre.

3. Brûleur selon la revendication 1, dans lequel le premier et le second canal annulaire (36, 42) dépassent du nez de brûleur (28).

4. Brûleur selon la revendication 1, dans lequel les chambres (K1, ..., K8) ont la forme de segments de cercle.

5. Brûleur selon la revendication 1, dans lequel chaque chambre (K1, ..., K8) est divisée en plusieurs chambres partielles (K1a, K1i) qui sont reliées entre elles par des moyens se rapportant à la technique des fluides.

6. Brûleur selon la revendication 5, dans lequel les chambres partielles (K1a, K1i) de chaque chambre (K1, ..., K8) sont agencées de manière radialement adjacente, si on les considère dans le sens axial des canaux annulaires (36, 42).

7. Brûleur selon la revendication 5, dans lequel les chambres partielles adjacentes (K1a, K1i) d'une chambre (K1, ..., K8) peuvent être traversées dans le sens opposé.

8. Brûleur selon la revendication 5, dans lequel des éléments conducteurs associés sont prévus à l'intérieur de chaque chambre partielle (K1a, K1i) et/ou de chaque chambre partielle (K1a, K1i) en vue de la conduite de gaz/d'air forcée.

9. Brûleur selon la revendication 8, dans lequel les éléments conducteurs sont agencés les uns par rapport aux autres de manière à ce que le gaz/l'air guidé à travers les chambres partielles (K1a, K1i) suive un tracé en forme de méandre.

10. Brûleur selon la revendication 1, dans lequel le récupérateur (22) se compose de plusieurs éléments partiels (50.1, ..., 50.x) disposés les uns derrière les autres dans le sens axial des canaux annulaires (36, 42).

11. Brûleur selon la revendication 1, dans lequel au moins les parois (52, 54, 56, 58) des chambres (36, 42) du récupérateur (22) sont composées d'un matériau ayant une grande conductivité thermique.

12. Brûleur selon la revendication 11, dans lequel les parois (52, 54, 56, 58) sont composées de métal.

13. Brûleur selon la revendication 11, dans lequel les parois (52, 54, 56, 58) se composent de carbure de silicium.

14. Brûleur selon la revendication 1, dans lequel le conduit d'arrivée du gaz (26) s'étend à travers le récupérateur (22) jusqu'au nez de brûleur (28).

15. Brûleur selon la revendication 1, dans lequel le nez de brûleur (28) présente un bord en forme de bride (30) qui présente des perforations (32) dans le prolongement du premier canal annulaire (36).

16. Four avec au moins un brûleur à récupération selon l'une des revendications 1 à 15, dans lequel le récupérateur (22) est agencé sur un côté extérieur d'une paroi de four (10), les canaux annulaires (36, 42) se prolongeant au moins dans la paroi de four (10) et le nez de brûleur (28) étant disposé dans la paroi de four (10) ou de manière adjacente à un côté intérieur de la paroi de four (10).
